# EUROPEAN PATENT APPLICATION

(11) **EP 3 822 503 A1**
(43) Date of publication of application: **19.05.2021**
(21) Application number: 19834541.5
(22) Date of filing: 25.06.2019
(51) Int. Cl.: F16C 33/78, F16J 15/3232, F16J 15/3244

(54) **SEALING DEVICE**

(30) Priority: 09.07.2018 JP 2018129706
(71) Applicant: NOK Corporation, Tokyo 105-8585 (JP)
(72) Inventor: KATO, Takuya, Fukushima-shi, Fukushima 960-1193 (JP)
(74) Representative: Global IP Europe Patentanwaltskanzlei
(86) International application number: PCT/JP2019/025245
(87) International publication number: WO 2020/012953

(57) **Abstract**

Increase of contact pressure of lips on their contact surface can be prevented. A sealing device is configured to be interposed between exterior-side and interior-side members 52 and 53 which rotate about a common axis relative to each other. The sealing device includes a metal ring 111 and a lip portion 131. The metal ring 111 is fitted into and fastened to an inner periphery of the exterior-side member 52. The lip portion 131 is formed of a rubber-like elastic material and is fastened to the metal ring 111 by vulcanization. The lip portion 131 includes annular grease, side and intermediate lips 132, 133 and 134. The annular grease lip 132 extends toward a structurally interior side, and has a first end 132a. The annular side lip 133 extends toward an atmosphere side, and has a second end 133a. The annular intermediate lip 134 is arranged between the grease and side lips 132 and 133 to extend toward the interior-side member 53, and has a third end 134a. The first, second and third ends 132a, 133a and 134a contact the interior-side member 53. The side lip 133 has a spiral protruding/recessed part 151 that is formed on a surface facing the intermediate lip 134 and runs in a direction opposite to a direction of machining marks of the interior-side member 53.

## Description

### FIELD

The present invention relates to a sealing device which can be used in car hub bearings, and the like.

### BACKGROUND

A hub seal as a sealing device used in car hub bearings is known (for example, Japanese Patent Laid-Open Publication No. 2017-40295, hereinafter referred to as "Patent Literature 1"). The sealing device disclosed in Patent Literature 1 is arranged between an outer ring 2 and an inner ring 5 which rotate relative to each other about a common axis, and seals against leakage between an atmosphere side and a structurally interior side in which balls 6 of a bearing are accommodated.

The sealing device in Patent Literature 1 includes a metal core 11 which is fitted and fixed onto an inner peripheral surface 2a of the outer ring, and an elastic member 12 which is formed of rubber and is fastened to the metal core by vulcanization molding (see paragraphs [0012], [0014], and [0016] in Patent Literature 1).

The elastic member includes three lips which has their end in tight contact with the inner ring. One of the three lips is a radial lip 122 which has an end extending toward the structurally interior side, and the other two are axial lips 121 which have an end extending toward the atmosphere side (see paragraph [0016] and Fig. 2 in Patent Literature 1).

### BRIEF SUMMARY

### TECHNICAL PROBLEM

Such hub seals are required to contribute low friction torque and improve muddy water resistance. For example, because the hub seal in Patent Literature 1 has the two axial lips (121), which have an end extending toward the atmosphere side, this hub seal will improve muddy water resistance.

However, the greater the number of the lips, the higher the sliding resistance between the lips and their contact surface. As a result, it is difficult for a hub seal which has a number of lips to contribute low friction torque.

Therefore, it is an object of the present invention is to prevent increase of contact pressure of lips on their contact surface.

### SOLUTION TO PROBLEM

Torque is increased by increase of the number of the lips. In this case, the torque is increased not only by the number of the lips but also by increase of contact pressure of lips on their contact surface. Such increase of contact pressure of a lip includes an increase caused by negative pressure which is produced in a space between two lips by machining marks on their contact surface.

For example, in the case of the hub seal in Patent Literature 1, closed spaces are defined between the two axial lips (121), and between the radial lip (122) and one of the axial lips (121) which is adjacent to this radial lip. Accordingly, in a certain direction of machining marks of their contact surface of the inner ring, air will leak from the spaces so that negative pressure is produced. As a result, the contact pressure of the lips on their contact surface increases.

A sealing device according to the present invention is configured to be interposed between an exterior-side member and an interior-side member which rotate about a common axis relative to each other, the sealing device including:
a metal ring fitted into and fastened to an inner periphery of the exterior-side member; and
a lip portion formed of a rubber-like elastic material and fastened to the metal ring by vulcanization, the lip portion including
   an annular grease lip extending toward a structurally interior side, the grease lip having a first end,
   an annular side lip extending toward an atmosphere side, the side lip having a second end, and
   an annular intermediate lip arranged between the grease lip and the side lip, the annular intermediate lip extending toward the interior-side member, the intermediate lip having a third end,
the first end, the second end and the third end configured to contact the interior-side member,
wherein the side lip has a spiral protruding/recessed part formed on a surface facing the intermediate lip, the protruding/recessed part running in a direction opposite to a direction of machining marks of the interior-side member.

### ADVANTAGEOUS EFFECTS

According to the present invention, increase of contact pressure of lips on their contact surface can be prevented.

### BRIEF DESCRIPTION OF DRAWINGS

Fig. 1 is a vertical cross-sectional view of a hub seal according to an embodiment.
Fig. 2 is a cross-sectional perspective view of the hub seal according to the embodiment.
Fig. 3 is an enlarged perspective view of a surface of a side lip to be in tight contact with an inner ring.

### DETAILED DESCRIPTION

The following description will describe a sealing device according to an embodiment with reference to drawings. The sealing device according to this embodiment is a hub seal which is used in car hub bearings (not shown entirely).

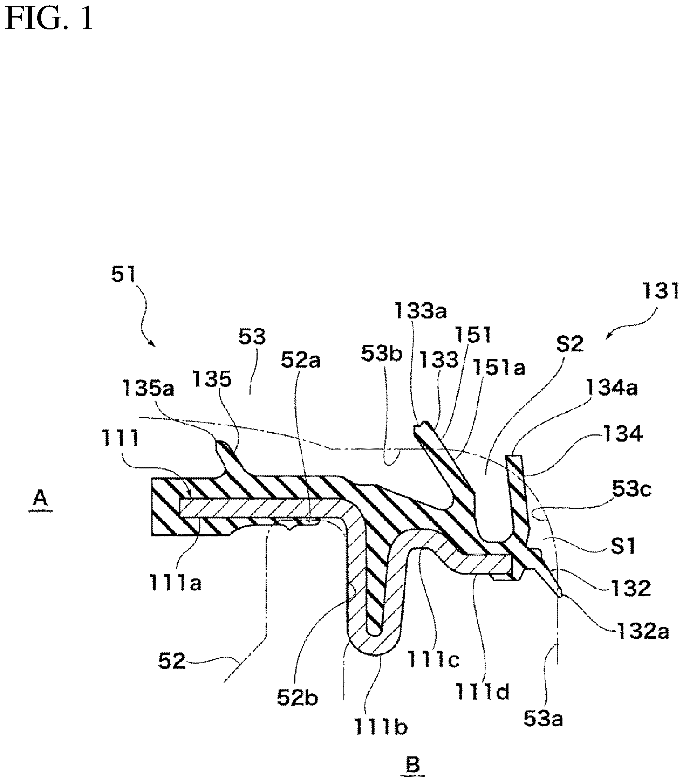

As shown by single-dot-dashed lines in Fig. 1, a hub bearing 51 includes an outer ring (exterior-side member) 52 and an inner ring (interior-side member) 53.

The inner ring 53 has a vertical surface 53a, a horizontal surface 53b, and a curved surface 53c. The vertical surface 53a and a horizontal surface 53b extend roughly perpendicularly to each other. The curved surface 53c is interposed between the vertical surface 53a and the horizontal surface 53b. The horizontal surface 53b communicates with an atmosphere side A. The vertical surface 53a communicates with a structurally interior side B.

The outer ring 52 has an inner peripheral surface 52a which faces the horizontal surface 53b of the inner ring 53. A bearing (not shown) is interposed between the outer ring 52 and a part of the inner ring 53 which extends from the vertical surface 53a toward the structurally interior side B. More specifically, the bearing is accommodated in the structurally interior side B and is applied with grease (not shown).

A hub seal 101 according to this embodiment includes a metal ring 111 and a lip portion 131 which is fastened to the metal ring 111.

The metal ring 111 includes a horizontal part (first horizontal part) 111a, a bent part (a first bent part) 111b, a bent part (second bent part) 111c, and a horizontal part (second horizontal part) 111d. The horizontal part 111a extends in a horizontal direction and has one end of the metal ring on the atmosphere side A. The bent part 111b is has a bent central section having a sectionally U shape which bulges toward the outer peripheral side. The bent part 111c is has a bent shape as a sectionally U shape which bulges toward the inner peripheral side. The horizontal part 111d extends in a horizontal direction and has another end of the metal ring on the structurally interior side B which is opposite to the atmosphere side A. The horizontal part 111a is fitted into the inner peripheral surface 52a of the outer ring 52. The bent part 111b abuts on a structurally interior-side surface 52b of the outer ring 52 which is located on the structurally interior side B. Accordingly, the metal ring 111 is positioned on and fastened to the outer ring 52.

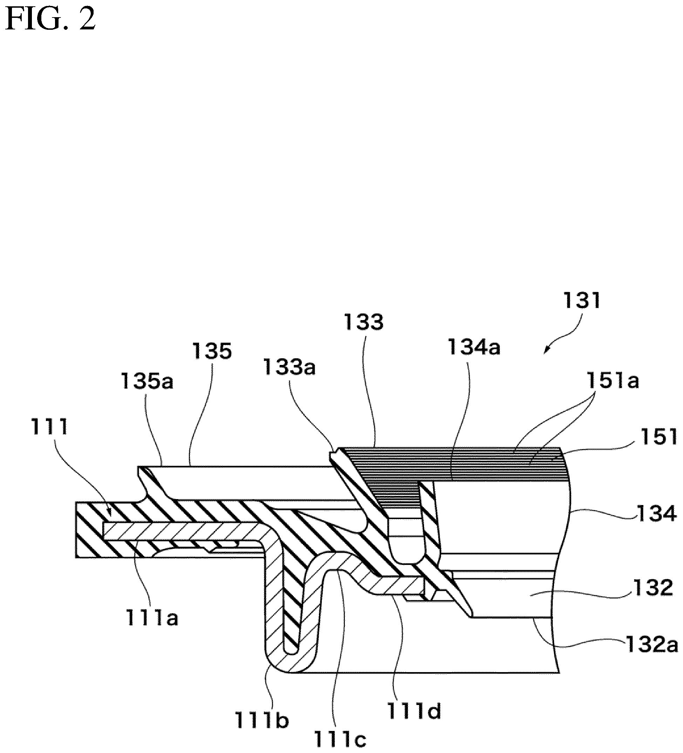

The lip portion 131 is a rubber-like elastic body and is fastened to the metal ring 111 by vulcanization as shown in Figs. 1 and 2. The lip portion 131 includes a grease lip 132, a side lip 133, an intermediate lip 134, and a labyrinth lip 135.

The grease lip 132 has an annular shape. The grease lip 132 extends toward the structurally interior side B, and has an end (first end) 132a. The grease lip 132 extends from the end of the horizontal part 111d of the metal ring 111 toward the vertical surface 53a of the inner ring 53. The end 132a of the grease lip 132 is brought in tight contact with the vertical surface 53a.

The side lip 133 has an annular shape. The side lip 133 extends toward the atmosphere side A, and has an end (second end) 133a. The side lip 133 extends from a connection part between the bent part 111c and the horizontal part 111d of the metal ring 111 toward the horizontal surface 53b of the inner ring 53. The end 133a of the side lip 133 is brought in tight contact with the horizontal surface 53b.

The intermediate lip 134 is arranged between the grease lip 132 and the side lip 133. The intermediate lip 134 extends from a part in proximity to a base of the grease lip 132 toward the curved surface 53c of the inner ring 53. The intermediate lip 134 has an end (third end) 134a which is brought in tight contact with the curved surface 53c.

The labyrinth lip 135 has an annular shape. The labyrinth lip 135 is arranged on the atmosphere side A with respect to the grease lip 132, the side lip 133 and the intermediate lip 134. The labyrinth lip 135 extends toward the atmosphere side A, and has an end 135a. The labyrinth lip 135 extends from a part in proximity to the end of the horizontal part 111a of the metal ring 111 toward the horizontal surface 53b of the inner ring 53. The labyrinth lip 135 does not contact the horizontal surface 53b so that a very small gap G is created between the labyrinth lip 135 and the horizontal surface 53b.

As discussed above, the ends 132a, 133a, and 134a of the grease lip 132, the side lip 133, and the intermediate lip 134 are brought in tight contact with the inner ring 53. According to this arrangement, a space S1 is defined between the grease lip 132 and the intermediate lip 134, and a space S2 is defined between the side lip 133 and the intermediate lip 134.

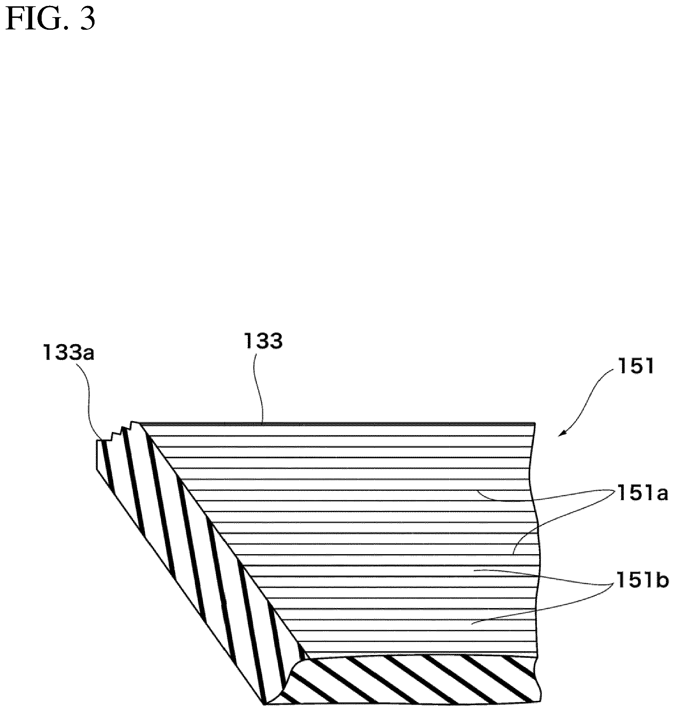

A spiral protruding/recessed part 151 is formed on a surface of the side lip 133 on the space S2 side as shown in Fig. 3. The spiral protruding/recessed part 151 is formed by a continuously running protrusion 151a. The space S2 communicate with the atmosphere side A through segments of a groove 151b which are formed between turns of a line of the protrusion 151a adjacent to each other.

Contact surfaces (the vertical surface 53a, the horizontal surface 53b and the curved surface 53c) of the inner ring 53 which the ends 132a, 133a and 134a of the lips 132,133 and 134 tightly contact are often formed rough when machined. Such surface roughness depends on machining accuracy. The surfaces can be smoother if they are machined more accurately. However, we necessarily accept a certain degree of roughness from viewpoint of manufacturability and the like. For this reason, asperities are produced by the machining on the contact surfaces of the inner ring 53 which the lips 132,133 and 134 tightly contact. As a result, very small gaps will be produced between the lips 132,133 and 134, and their contact surfaces.

Such asperities which are produced on the contact surfaces will run in a particular direction, in other words, machining marks will appear. Air may be drawn out from the spaces S1 and S2 by sliding movement of the lips 132,133 and 134 with respect to their contact surfaces so that negative pressure is produced depending on conditions of the direction of machining marks. If negative pressure is produced in the spaces S1 and S2, contact pressure of the lips 132,133 and 134 on their contact surfaces increases, and torque correspondingly increases.

The protruding/recessed part 151 of the side lip 133 according to this embodiment runs at a direction opposite to the direction of machining marks which remain on the contact surfaces of the inner ring 53 in tight contact with the lip 132,133 and 134. According to this arrangement, negative pressure in the spaces S1 and S2 can be reduced. That is, the direction of the spiral groove 151b which is formed by the continuously running protrusion 151a is designed opposite to the direction of machining marks on its contact surface.

More specifically, the continuously running protrusion 151a preferably runs at an angle from 1° to 5° with respect to a perfect circle or at an angle within a range of +/-2° with respect to the machining marks which remain on its contact surface, and/or the protrusion 151a preferably has a turn pitch within a range from 0.04 to 0.4 mm.

In the hub bearing 51 according to this embodiment, the inner ring 53 rotates with respect to the outer ring 52. In the rotation, the hub seal 101 seals a gap between the outer ring 52 and the inner ring 53. The grease lip 132 prevents leakage of grease from the structurally interior side B. The labyrinth lip 135, the side lip 133, and the intermediate lip 134 prevent the entry of muddy water and dust from the atmosphere side A.

The hub seal 101 is fastened to the outer ring 52. In this arrangement, when the inner ring 53 rotates relative to the outer ring 52, the lips 132,133 and 134 tightly contact the vertical surface 53a, the horizontal surface 53b and the curved surface 53c as their corresponding contact surfaces of the inner ring 53. During the rotation, air may be drawn out from the spaces S1 and S2 so that negative pressure is produced depending on conditions of the direction of machining marks which remain on the contact surface

The protruding/recessed part 151 is formed on one surface of the side lip 133 in this embodiment. The protruding/recessed part 151 extends at a direction opposite to the direction of machining marks which remain on its contact surfaces of the inner ring 53. According to this arrangement, air on the atmosphere side A is drawn into the space S1 by the sliding movement of the lips 132,133 and 134 on their contact surfaces of the inner ring 53. Accordingly, the air drawn into the space S1 compensates the air drawn out from the space S1. As a result, the space S1 will not be brought into negative pressure. Consequently, increase of contact pressure of the lips 132,133 and 134 on their contact surfaces can be reduced. Therefore, increase of contact pressure of the lip portion 131 on their contact surface can be prevented.

The inventors of the present invention found that the negative pressure prevention effect in the space S1 can be effectively provided under the aforementioned conditions, namely,
the protrusion 151a runs at an angle from 1° to 5° with respect to a perfect circle or
at an angle range within 2° with respect to the machining marks which remain on the contact surface, and/or
the protrusion 151a has a turn pitch within a range from 0.04 to 0.4 mm.

In this embodiment, because the protruding/recessed part 151 is formed by the continuously running protrusion 151a, the turn pitch and width of the groove 151b which introduces air into the space S2 can be easily and desirably designed by suitably designing the turn pitch and thickness of the protrusion 151a. Also, the protruding/recessed part 151 can be easily formed by using a die (not shown) which forms the lip portion 131.

Various changes and modifications can be made in practical applications.

The protruding/recessed part 151 according to this embodiment has been illustratively described to be formed by the spirally running protrusion 151a which is formed on one surface of the side lip 133. That is, the groove 151b is formed between turns of a line of the protrusion 151a adjacent to each other by forming the protrusion 151a. The protruding/recessed part is not limited to this embodiment. A protruding/recessed part 151 can be formed by forming a line of groove 151b on one surface of the side lip 133.

Also, the protrusion 151a does not necessarily continuously run but can have discontinuous shapes as long as the discontinuous shapes form a spiral shape as a whole. That is, protrusions 151a can be discrete protrusion lines as long as the grooves 151b are formed between the protrusions 151a adjacent to each other, and air can be introduced into the space S2 from the atmosphere side A through the grooves 151b.

The protruding/recessed part 151 is only required to be formed in an area through which the atmosphere side A can communicate with the space S2. The protruding/recessed part can be entirely or partially formed on one surface of the side lip 133 as long as this requirement is satisfied.

Any changes and modifications can be made to other parts in the embodiment.

### Reference Signs List

- 51: Hub Bearing
- 52: Outer Ring
- 53: Inner Ring
- 53a: Vertical Surface
- 53b: Horizontal Surface
- 53c: Curved Surface
- 101: Hub Seal
- 111: Metal Ring
- 111a: Horizontal Part
- 111b: Bent Part
- 111c: Bent Part
- 111d: Horizontal Part
- 131: Lip Portion
- 132: Grease Lip

- 133: Side Lip
- 134: Intermediate Lip
- 135: Labyrinth Lip
- 132a, 133a, 134a, 135a: End
- 151: Protruding/Recessed Part
- 151a: Protrusion
- A: Atmosphere Side
- B: Structurally Interior Side
- G: Gap
- S1, S2: Space

## Claims

1. A sealing device configured to be interposed between an exterior-side member and an interior-side member which rotate about a common axis relative to each other, the sealing device comprising:
a metal ring fitted into and fastened to an inner periphery of the exterior-side member; and
a lip portion formed of a rubber-like elastic material and fastened to the metal ring by vulcanization, the lip portion including
an annular grease lip extending toward a structurally interior side, the grease lip having a first end,
an annular side lip extending toward an atmosphere side, the side lip having a second end, and
an annular intermediate lip arranged between the grease lip and the side lip, the annular intermediate lip extending toward the interior-side member, the intermediate lip having a third end,
the first end, the second end and the third end configured to contact the interior-side member,
wherein the side lip has a spiral protruding/recessed part formed on a surface facing the intermediate lip, the protruding/recessed part running in a direction opposite to a direction of machining marks of the interior-side member.

2. The sealing device according to claim 1, wherein a space defined by the side lip, the intermediate lip, and the interior-side member communicates with the atmosphere side through the protruding/recessed part.

3. The sealing device according to claim 1 or 2, wherein the protruding/recessed part is formed by a continuously running protrusion.

4. The sealing device according to any one of claims 1 to 3, wherein the metal ring includes
a first horizontal part extending in a horizontal direction, the first horizontal part having an end on the atmosphere side,
a first bent part having a sectionally U shape bulging toward the exterior-side member,
a second bent part having a sectionally U shape bulging toward the interior-side member, and
a second horizontal part extending in the horizontal direction, the second horizontal part having an end on the structurally interior side.

5. The sealing device according to any one of claims 1 to 4, wherein the metal ring is abut on and fastened to a surface of the exterior-side member facing the structurally interior side.

6. The sealing device according to claim 4 or 5, wherein the grease lip extends from the second horizontal part.

7. The sealing device according to any one of claims 4 to 6, wherein the side lip extends from a connection part between the second bent part and the second horizontal part.

8. The sealing device according to any one of claims 4 to 7, wherein the intermediate lip extends from a base of the grease lip.

9. The sealing device according to any one of claims 3 to 8, wherein the protrusion runs at an angle from 1° to 5° with respect to a perfect circle.

10. The sealing device according to any one of claims 3 to 9, wherein the protrusion runs at an angle within a range of 2° with respect to the machining marks remaining on the interior-side member.

11. The sealing device according to any one of claims 3 to 10, wherein the protrusion has a turn pitch from 0.04 to 0.4 mm.

12. The sealing device according to any one of claims 1 to 11, wherein
the exterior-side member is an outer ring of a car hub bearing, and
the interior-side member is an inner ring of the car hub bearing.
